# EUROPEAN PATENT APPLICATION

(11) **EP 3 495 960 A1**
(43) Date of publication of application: **12.06.2019**
(21) Application number: 17205571.7
(22) Date of filing: 05.12.2017
(51) Int. Cl.: G06F 15/173

(54) **PROGRAM, APPARATUS, AND METHOD FOR COMMUNICATING DATA BETWEEN PARALLEL PROCESSOR CORES**

(71) Applicant: FUJITSU LIMITED, Kanagawa 211-8588 (JP)
(72) Inventor: AL-JARRO, Ahmed, London, W1T 6PF (GB)
(74) Representative: Haseltine Lake Kempner LLP

(57) **Abstract**

Embodiments include a method for communicating data between a group of N processor cores executing a parallel computing application, where N is a positive integer equal to or greater than three, the method comprising a point-to-point communications process, including the following steps: reading in, by any one processor core of the group, a processing instruction from the parallel computing application invoking an operation with a global data dependency among the group of N processor cores; responding to the reading in of the processing instruction at the one processor core by, in an initial step performed by each member of the group as a present processor core: sending, in a point-to-point communication to an immediate successor processor core of the present processor core in a defined cyclic order on the group, data for which the present processor core is responsible; receiving, in a point-to-point communication from an immediate predecessor processor core of present processor core in the defined cyclic order on the group, data for which the predecessor processor core is responsible. And in a subsequent step performed successively N-1 times by each member of the group as a present processor core: sending, in a point-to-point communication to the immediate successor processor core, the data in the point-to-point communication received by the present processor core in the preceding step; receiving, from the immediate predecessor processor core, the data in the point-to-point communication received by the predecessor core in the preceding step.

## Description

### INTRODUCTION

The present application lies in the field of parallel computing and in particular relates to inter-processor core communication in executing parallel computing applications.

Computing applications utilise parallel processing, that is, simultaneous processing of processing instructions by a plurality of processor cores, in order to reduce execution time of the computing application. The plurality of processor cores may be on a single or multiple central processing units (CPUs). The multiple CPUs may be on a single or multiple computing nodes. Each processor core has its own memory for storing data. In the execution of software code on parallel processor cores, each processor core refers to data that is allocated to its own memory.

To exchange (transmit, receive or both transmit and receive) any data between parallel processor cores, intra and/or inter communications are invoked within and/or between the individual computing nodes, respectively. To this end, there exist several libraries that take care of communicating the data exchange between the processes, which are typically invoked via the message passing interface (MPI) standard. The nature of these communications is classified into two: point-to-point communications and collective communications. The point-to-point communications are strictly used for communicating data between two MPI processes; whereas, collective communications are responsible for communicating data among more than two MPI processes. The collective communications are typically useful for transferring and receiving data that concerns the entire processing pool of MPI processes.

As the number of MPI processes increases, or the size of the communicated message is increased, the collective communications are known to suffer from high latency penalties when compared to those measured for the point-to-point communications. Specifically, collective communications can incur latency penalties that are up to three orders of magnitude larger than those corresponding to the point-to-point communications. As a result, the latency penalties associated with collective MPI communications can hinder the overall parallel performance of high performance computing (HPC) systems. Particularly, since the speed of the interconnection infrastructure that HPC systems host is also typically several orders of magnitude less efficient than their computational capability; the latency penalties associated with collective communications can impose serious performance limitations.

### STATEMENTS OF INVENTION

Embodiments include a method for communicating data between a group of N processor cores executing a parallel computing application, where N is a positive integerequal to or greater than three, the method comprising a point-to-point communications process, including the following steps: reading in, by any one processor core of the group, a processing instruction from the parallel computing application invoking an operation with a global data dependency among the group of N processor cores; responding to the reading in of the processing instruction at the one processor core by, in an initial step performed by each member of the group as a present processor core: sending, in a point-to-point communication to an immediate successor processor core of the present processor core in a defined cyclic order on the group, data for which the present processor core is responsible; receiving, in a point-to-point communication from an immediate predecessor processor core of present processor core in the defined cyclic order on the group, data for which the predecessor processor core is responsible. And in a subsequent step performed successively N-1 times by each member of the group as a present processor core: sending, in a point-to-point communication to the immediate successor processor core, the data in the point-to-point communication received by the present processor core in the preceding step; receiving, from the immediate predecessor processor core, the data in the point-to-point communication received by the predecessor core in the preceding step.

In invention embodiments, at each step, each processor core sends data to only one other processor core, and receives data from only one other processor core. Therefore, there is no need to use collective communications (in which a processor core receives data from multiple processor cores in a single operation). The sharing of data between the group of processor cores is achieved using solely point-to-point communications. An operation with global data dependency requires that each processor core receives data stored by each other processor core. That is, data for which each other processor core is responsible. Wherein responsibility may include for storing and updating the data. Each processor core has a coupled memory. Data for which a processor core is responsible is the data stored on the memory coupled to the processor core.

Global data dependency includes a data dependency scope comprising the group of N processor cores, assuming that N is all of the processor cores. That is to say, within the population of N processor cores, a data dependency scope comprising the group of N processor cores is a global data dependency.

Data sent by the present processor core in the sending is data for which the processor core is responsible. The range of those data may be defined by the operation or may be predefined, for example, all of the data for which the present processor core is responsible. The same applies to the data sent to the present processor core by the predecessor processor core, and to the data sent by all processor cores in the plurality of processor cores.

Advantageously, embodiments provide an effective mechanism for replacing execution operations with global data dependency (which may be referred to as all-to-all processor data communication operations, i.e., all processors send data to one another) that are performed in parallel and heavily rely on collective communications with alternative parallel operations that are mathematically equivalent but rely on only point-to-point communications. The cost of performing parallel MPI communications, point-to-point or collective, are typically defined in terms of the latency (α) incurred per communicating one MPI message, and the number of MPI messages required to complete a given operation.

N is a positive integer equal to or greater than three. For example, N may be four, five, ten, more than ten, 100, or more than a hundred.

The invoked operation may include modifying received data, and therefore the process includes sufficient steps to return data to the respective processor core responsible for the data. The version of data stored at each processor core is maintained up to date.

The group of N processor cores are configured to perform parallel processing of a computing application. In a particular architecture: the group of N processor cores are distributed across a plurality of central processing units.

Advantageously, such embodiments greatly reduce the latency in all-to-all data communication operations in the execution of computing applications by plural processor cores distributed across plural central processing units.

In a further particular architecture: the plurality of central processing units are distributed across multiple computing nodes, the multiple computing nodes forming a parallel computing system.

Advantageously, such embodiments greatly reduce the latency in global data communication operations in the execution of computing operations by plural processor cores distributed across plural central processing units in plural computing nodes. For example, HPC (high performance computing) applications executed by a data centre, supercomputer, or cloud-type architecture.

The specific relative timings of the various send and receive actions composing the method may be dependent upon the nature of a mathematical operation as part of which the method is invoked. Optionally, the initial step is performed by each member of the group simultaneously; and each performance of the subsequent step is by each member of the group simultaneously.

Simultaneously is taken to mean that the step is undertaken in the same or within a predetermined maximum number of processor clock cycles of one another at each of the processor cores. Furthermore, a subsequent step is not undertaken until all processor cores have completed their send/receive actions in the preceding step.

The defined cyclic order means that a logical order is defined among the processor cores in which logical order the earliest member in the cyclic order follows on from the latest member. The manner in which the cyclic order is defined is dependent upon the implementation details. For example, what mathematical operations are being performed in the computing application, and is the hardware configuration (i.e. the arrangement of processor cores in the group) dynamic or static.

In a first example: the defined cyclic order on the group is predefined for the execution of the parallel computing application.

Advantageously, such a technique is simple to implement and reduces control operations at runtime of the method.

In a second example: the defined cyclic order on the group is defined on-the-fly at the invocation of the operation.

Advantageously, such a technique is flexible and accommodates changes to membership of the group of processor cores executing a mathematical operation as a part of which the method is performed. On-the-fly is taken to mean dynamically, in response to the invocation of the operation.

Whichever of the above techniques is used for defining the cyclic order, the order may be determined randomly or at least partially deterministically. For example, if the group of processor cores comprises processor cores from a plurality of central processing units, then it may be that within the defined cyclic order, processor cores from the same central processing unit are consecutively adjacent to one another.

In other words, the defined cyclic order comprises, for each of the central processing units, a consecutively adjacent linear order of the processor cores from the central processing unit. Advantageously, communication cost is suppressed by minimising the requirement for cross-CPU communications.

If the group of processor cores are in a parallel computing system comprising a plurality of computing nodes each comprising a plurality of CPUs, then, in addition to the above constraint in which all of the processor cores from the same CPU are consecutively adjacent to one another in the defined cyclic order, the linear order defined by the processor cores from all of the CPUs in the same computing node are also consecutively adjacent to one another. In other words: within the defined cyclic order, processor cores from central processing units in the same computing node are consecutively adjacent to one another.

Advantageously, communication cost is suppressed by minimising the requirement for cross-CPU and cross-node communications.

N is the number of processor cores in the group performing the global data communication operation. N has a lower limit of 3. There is no strict upper limit on N, although in certain architectures, embodiments may be particularly advantageous in particular ranges.

For example: N may be less than: log N, multiplied by a latency associated with a collective communication in the group of processor cores, divided by a latency associated with a point-to-point communication in the group of processor cores.

Collective communications that are widely used for parallelising mathematical operations include, for example, the reduction operation (MPI_reduce). MPI_reduce takes an array of input elements from each of the entire pool of MPI processes, N, and returns an array of output elements to one target process. The array of output elements contains the reduced result, where the target process that receives the reduced result is typically referred to as the 'root' process. Collective communication operations typically amount to a communication cost in the order of O(α_{col} log N), where α_{col} ≈ 10⁻⁶ secs denotes the latency associated with collective communications.

Throughout this document, log is taken to be a logarithm with base 10.

For the complete evaluation of some mathematical operations by a group of processor cores, the outcome of which has a global dependency on the data that reside on each processor core; an exchange of data from every processor core to every other processor core is required. The data communication in such mathematical operations can be performed using the method of an embodiment. The global dependency results in having to call for successive reduction operations between all processes, N, which leads to a communication cost in the order of O(α_{col} N log N). Instead, if these collective operations are replaced with successive point-to-point communications only, whose latency is defined by αₚ₂ₚ ≈ 10⁻⁹ secs; they result in a communication cost is in the order of O(αₚ₂ₚ N²). From first inspection, one can conclude that a communication cost in the order of O(N²) will be larger than that of O(N log N). However, as aforementioned, the cost associated with αₚ₂ₚ is much smaller than that of αcol, where α_{col} is typically found to be larger than αₚ₂ₚ by at least three orders of magnitude, i.e. (α_{col} / αₚ₂ₚ) = 10³. Therefore, provided that the value of (αₚ₂ₚ N²) is lower than that of (α_{col} N log N); for the execution of operations with global data dependency, it is much more efficient to use operations that rely on only point-to-point communications.

Methods may further include a step which determines whether to perform a mathematical operation using point-to-point communications or collective communications. For example:
The method may further comprise, upon the execution operation with global data dependency being invoked: obtaining predefined stored values of a latency associated with a collective communication in the group of processor cores and a latency associated with a point-to-point communication in the group of processor cores, and obtaining a value of N; calculating, as a first value, the latency associated with a collective communication in the group of processor cores multiplied by N logN; calculating, as a second value, the latency associated with a point-to-point communication in the group of processor cores multiplied by N² (N squared); and, if the first value is greater than or equal to the second value, performing the point-to-point communications process; and if the second value is greater than the first value, performing a collective communications process to carry out the execution operation.

Wherein, the collective communications process comprises: for each processor core in turn as a recipient processor core, at the processor cores other than the recipient processor core, executing a collective communication in which each of the processor cores other than the recipient processor core sends, to the recipient processor core, data corresponding to the recipient processor core.

Embodiments of another aspect include a parallel computing system comprising a group of N processor cores configured to execute a parallel computing application, where N is a positive integer equal to or greater than three, the group of N processor cores being further configured to execute a point-to-point communications process, including the following steps: reading in, by any one processor core of the group, a processing instruction from the parallel computing application invoking an operation with a global data dependency among the group of N processor cores and responding to the reading in of the processing instruction at the one processor core by, in an initial step performed by each member of the group as a present processor core: sending, in a point-to-point communication to an immediate successor processor core of the present processor core in a defined cyclic order on the group, data for which the present processor core is responsible; receiving, in a point-to-point communication from an immediate predecessor processor core of present processor core in the defined cyclic order on the group, data for which the predecessor processor core is responsible. And in a subsequent step performed successively N-1 times by each member of the group as a present processor core: sending, in a point-to-point communication to the immediate successor processor core, the data in the point-to-point communication received by the present processor core in the preceding step; receiving, from the immediate predecessor processor core, the data in the point-to-point communication received by the predecessor core in the preceding step.

### DETAILED DESCRIPTION

A detailed description of embodiments will now be set out, with reference to the accompanying drawings, in which:
Figure 1 illustrates a method of an embodiment;
Figure 2 illustrates a hardware architecture of an embodiment;
Figures 3a & 3b are schematic illustrations of the flow of data in an operation with a global data communication requirement for the specific case with N=4 processor cores;
Figures 4a and 4b illustrate flow of data along a defined cyclic order in a group of processor cores;
Figure 5 is a flowchart illustrating a control mechanism in an embodiment; and
Figure 6 is a hardware architecture of a computing device in a parallel computing system of an embodiment.

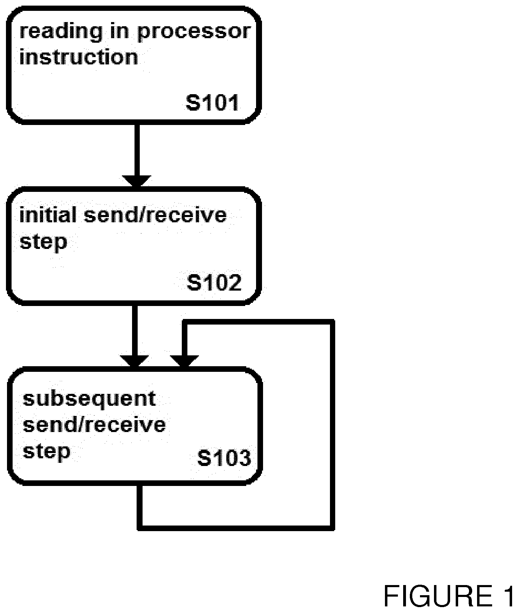

Figure 1 illustrates a flow of steps in a method of an embodiment. The method comprises a reading in step, S101, and initial send/receive step, S102, and a number of iterations of a subsequent send/receive step, S103. The number of iterations is determined relative to N, the number of processor cores executing the mathematical operation of which the communication method forms part, and is N-1.

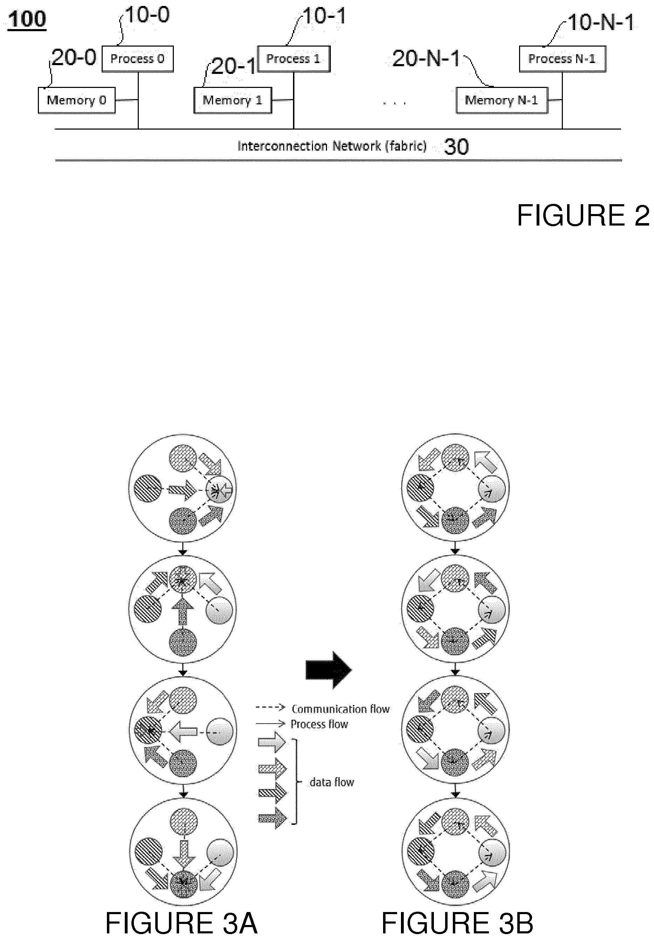

Figure 2 is a schematic of a parallel processor of an embodiment. The parallel processor of Figure 2 is configured to execute the method of Figure 1.

The parallel processor 100 of Figure 2 is a generalised schematic illustration. It is generalised insofar as the distribution of the processor cores 10 between different CPUs and computing nodes is not specified. Thus, the interconnection network may be intra-CPU, inter-CPU, intra-node, inter-node, or a combination of some or all of the above.

The parallel processor 100 may also be referred to as a parallel computing system, and comprises, for example, multiple computing nodes and an interconnection network (fabric) that is responsible for communicating data between the computing nodes. Each node comprises a number of central processing units (CPU), also referred to as sockets. Each socket comprises several sub-processing units 10, called cores or processor cores, each of which performs a process at a software-level, where the total number of cores or processes is denoted by N. In other words, there is a one:one correspondence between processor cores and processes. In the execution of software codes on parallel computing systems, each process 10 refers to or is responsible for data that is allocated to its own coupled memory 20. To exchange (transmit, receive or both transmit and receive) any data between parallel processes 10, intra and/or inter communications are invoked via the interconnection network 30 within and/or between the individual computing nodes, respectively. A process is at a software level, the activity taking place on a processor core. So, each process corresponds to a processor core. Each processor core 10 is coupled to a memory.

The parallel processor 100 of Figure 1 is configured to perform the method of Figure 1. The parallel processor 100 is executing software code from a parallel computing application (that is, software code with multi-threaded processing instructions) on a group of N processor cores 10 each having a respective memory 20, and communicating data between one another over the interconnection network 30.

The parallel computing application comprises processing instructions that are read in by one of the processor cores and performed or executed. The processing instructions may be divided into parallel threads of logically connected instructions, with a thread being assigned to one or more processor cores 10 to execute. A processing instruction when read in by a processor core 10 causes or invokes the processor core 10 to execute or perform an operation on data. The operation may include a communication operation, such as send/receive to/from another processor core 10, and/or may include a data processing operation such as a mathematical operation on specified data items.

In the method of Figure 1, at S101, a processing instruction from the parallel computing application invoking an operation with a global data dependency among the group of N processor cores 10 is read in by one of the group of processor cores 10. Data dependency is taken to mean the set of processor cores storing (i.e. responsible for) data required to complete an operation, and the set of processor cores required to see or operate on those data. For example, in an all-to-one processor data dependency operation, one processor core requires data from each of the remaining processor cores in the group. In a global- (or all-to-all processor-) data dependency operation, each of the processor cores 10 requires data from each of the other processor cores. In other words, in step S101, the processing instruction read in by one of the processor cores 10 invokes an operation with a global data dependency.

It is assumed that each of the processor cores stores data on its coupled memory relevant to the invoked operation. However, optionally, it may be that the invoked operation defines a scope or range of relevant data, and that a call is transmitted by the processor core invoking the operation to the remaining processor cores specifying the scope, in response to which call processor cores storing data within the specified scope on the respective coupled memory respond to the call by identifying themselves, the defined cyclic order being defined only on the processor core invoking the operation and the processor cores identifying themselves in response to the call.

The method is concerned with the communication of data between processor cores in the execution of an unspecified operation. In other words, the method is a communication method, which is agnostic in terms of the operation or operations to which it is applied.

The initial step S102 is performed by each processor core 10 in the group of N processor cores. In performing the initial step S102, each processor core 10 performs a send action and a receive action. The pertinent/subject/current processor core 10 is referred to as the present processor core 10. No structural or functional limitation is implied by use of the term "present", which is used solely to indicate the processor core being presently discussed from among the group of N processor cores.

A cyclic order is defined on the group of processor cores 10. The cyclic order may be pre-defined at the beginning of the execution of the parallel computing application, or may be defined dynamically as part of the response to the reading in of the processing instruction. A cyclic order is a notional placement of the processor cores into a repeating series. Each of the processor cores may be notified of some (i.e. the immediate successor and predecessor) or all of the defined cyclic order.

In the initial step, each of the processor cores sends, in a point-to-point communication to the immediate successor processor core of the present processor core in the defined cyclic order on the group, data for which the present processor core is responsible. The scope of the data that is sent may be set by the operation, so that the data for which the present processor core is responsible is within the context of the operation being performed, that is, all data relevant to or required by the invoked operation and stored on the memory 20 of the present processor core.

Furthermore, also in the initial step (and by virtue of a send action performed by the predecessor processor core in the defined cyclic order), each of the processor cores receives, in a point-to-point communication from the immediate predecessor processor core of present processor core in the defined cyclic order on the group, all of the data for which the predecessor processor core is responsible.

At step S102, each member of the group forwards, to the immediate successor processor node in the defined cyclic order, the data received from the immediate predecessor node in the preceding step. The preceding step being, in the case of the first performance of S102, the initial step, or, in the case of the second and subsequent performances of S102, the preceding performance of the subsequent step. Also as part of step S102, each processor core performs a receiving action. Specifically, receiving, from the immediate predecessor processor core in the defined cyclic order, the data in the point-to-point communication received by the predecessor processor core in the preceding step.

After the N-1^{th} performance of the subsequent step, all of the processor cores have received the data for which all of the other processor cores are responsible. Thus, the all-to-all communication of data is achieved. For example, the invoked operation may require each of the processor cores to make determinations which require visibility of data stored by all of the other processor cores (or specifically, their respective memory 20). The method of Figure 1 is not limited to a particular operation, but it can be appreciated that there are types of mathematical operations for which all-to-all data communication is required.

The point-to-point communication may be an MPI point-to-point communication. The point-to-point communication is a send/recieve (or a combined MPI_Sendrecv) operation by the present processor core to/from a specified recipient/sender (the immediately succeeding processor core in the defined cyclic order).

Figures 3a & 3b are schematic illustrations of the flow of data in an operation with an all-to-all data communication requirement for the specific case with N=4 processor cores. Figure 3a illustrates the use of a collective communication-based technique. Figure 3b illustrates the use of a point-to-point communication-based technique, for example, as set out in Figure 1. The hardware performing the operation is as illustrated in Figure 2.

In Figures 3a & 3b, the solid line arrows represent the process flow (i.e. from one step to the next) and the broken and filled arrows represent the communication and data flow. The filled small circles represent the 4 different processor cores, and the complete all-to-all data communication operation is constructed from 4 steps. The pattern used to fill the data arrows in Figures 3a and 3b corresponds to the pattern used to fill the processor core from which the data originates (in the context of the data communication operation).

Figure 3a illustrates, in four successive steps (each circle is a step), a collective communication technique. In the collective communication technique, each processor core takes a turn as recipient processor core. At the processor cores other than the recipient processor core, in each step, a collective communication is executed in which each of the processor cores other than the recipient processor core sends, to the recipient processor core, data corresponding to the recipient processor core (i.e. data relevant to the recipient processor core, or data requested by the recipient processor core).

A point-to-point communication, such as those used in Figure 3b, involves two processor cores, a specified sender and a specified receiver. At each step in Figure 3b, four individual point-to-point communications are performed using, for example, the MPI mechanism in the parallel processor. In Figure 3a, at each step, a single collective communication is performed. A collective communication involves all processor cores in the group, one as recipient, and the remainder as senders.

Embodiments utilise the technique of Figure 3b to perform data communication operations which would otherwise have been performed using the technique of Figure 3a.

In Figure 3b, the top circle corresponds to the initial step S102 of Figure 1, and the lower three circles correspond to three performances of the subsequent step S103 of Figure 1.

The cost of using N point-to-point operations, instead of N collective operations with an O(α_{col} N log N) cost, is O(αₚ₂ₚ N₂). Also the cost associated with αₚ₂ₚ is typically three orders of magnitude (10³) smaller than that of α_{col}. Therefore, provided that (αₚ₂ₚ N²) < (α_{col} N log N); using point-to-point operations with O(αₚ₂ₚ N²) communication cost is much more efficient than using operations with O(α_{col} N log N) communication cost. O is shorthand for "in the order of".

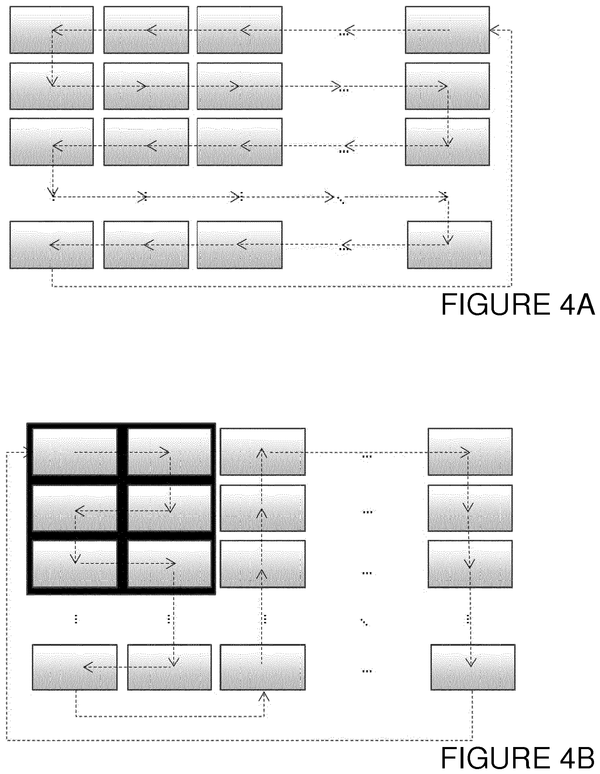

In Figure 3b, the global outcome from the data that reside on every process and for the same mathematical operation is achieved via using successive point-to-point communications. This is schematically presented in Figure 4a, where the flow of the full data contributions that every process will ultimately receive from every other process is now reconfigured so that instead of all the processor cores, N, sending their data contributions that correspond to one processor core at a time, and is repeated N times; all processor cores now simultaneously communicate the data contribution they are responsible for, however, each sends the data contribution they are responsible for to a different process. The data being sent is represented by the head of the arrows, where each originates from all the different processes and each one points towards one and only one process. Therefore, every single process communicates with at most one other process at a time. At the first instance, if local data dependency is identified for all processes, then no communication is performed. Thereafter, each individual process communicates the data it is responsible for to the next neighbouring process. This mechanism is then repeated N times, whereby in each successive point-to-point communication each process continues to contribute the data it is responsible for to the next process in the pipeline. The data contribution each process is responsible for is communicated to the next process in the pipeline via the data buffer that was received by the process in question in the preceding step.

The ordering of the processor cores within the defined cyclic order may be designed dynamic. Therefore, there is no restriction on the order in which the point-to-point communications must take place. This is schematically shown in Figures 4a & 4b, where by following the broken-arrowed lines in Figures 4a and 4b, as examples two possible but different scenarios are presented for the communication and flow. The only mandatory measure is that the overall number of communications is bound by the total number of processes N. Furthermore, for increased efficiency in the point-to-point communications cost, embodiments may give priority in the order of communication between the individual processor cores to the intra-node over the inter-node communications. Therefore, for a parallel computing system, comprising more than one computing node, priority in communicating data between the individual processes is given to the processes that reside within the same computing node. This is schematically presented in Figure 4b, where the black box indicates processes that are invoked within the same computing node (i.e. processor cores within the same computing node).

The latency cost is heavily influenced by the number of processes used, N, as well as the size of the communicated message; whereby, the larger N, or the size of the data to be communicated, the higher the latency cost. The exact latency values depend on the manufacturer specifications. Latency values for both point-to-point and collective communications, for multiple values of N, may be stored by the parallel processor or parallel computing system and made accessible to entities carrying out the method of an embodiment. For example, such values may be stored as a lookup table. Nevertheless, the ratio between collective and point-to-point communications, which is typically recorded at α_{col} / αₚ₂ₚ ≈ 10³, is applicable to all known communication interconnects and therefore this observation is universal.

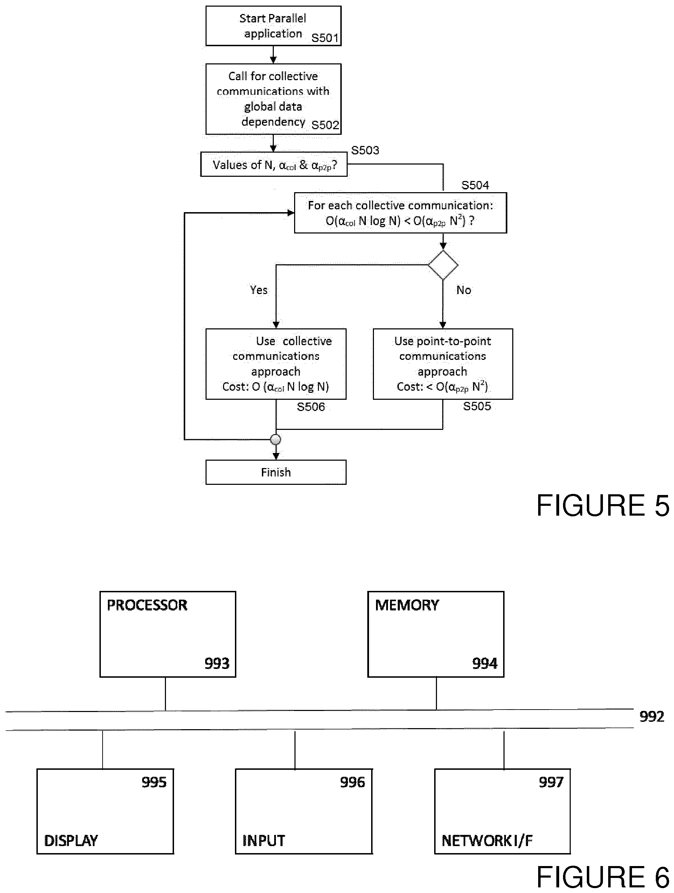

Figure 5 is a flow chart of a control process in a particular embodiment. In the particular embodiment, a criteria is applied prior to the initiation of the all-to-all data communication operation to determine whether to utilise a collective communication based approach, or a point-to-point communication-based approach.

At step S501, execution of the parallel computing application by a group of processor cores begins. At step S502, one of the processor cores reads in a processing instruction that requires all processes have access to the global data being stored by all processor cores in the group. At S503, values of the latencies associated with collective (α_{col}) and point-to-point (αₚ₂ₚ) communications for the target number of processes (N) are read. The lookup table storing the latency values may include an axis for message size, so that a typical message size in the operation can be used to obtain more accurate latency values.

Thereafter, for the processing instruction encountered at step S502, and each subsequent operation with global data dependency, a criterion on the mode of execution is allowed for, whereby it runs a simple check as follows at S504. If the value of (α_{col} N log N) is larger than that for (αₚ₂ₚ N₂), the point-to-point communication-based process is selected at S505. If not, then the process reverts to that of the original setup, i.e. it uses the collective communications-based approach at S506.

FIGURE 6 is a block diagram of a computing device, such as a computer forming part of a parallel computing system which embodies the present invention, and which may be used to implement a method of Figures 1, 3A-3B, and/or 5. The computing device comprises processor hardware 993, and memory, 994. The processor hardware may be one or multiple processor cores and, in the case of multiple, may be distributed across one or multiple CPUs. Optionally, the computing device also includes a network interface 997 for communication with other computing devices, for example with other computing devices of invention embodiments.

For example, an embodiment may be composed of a network of such computing devices forming a parallel computing system. Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor hardware 993 is configured to control the computing device and execute processing operations, for example executing code stored in the memory to implement a parallel computing operation by performing multiple processes on multiple processor cores. The memory 994 stores data being read and written by the processor hardware 993. The memory includes an individual memory for each processor core in the processor hardware 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 997 may display a representation of data stored by the computing device and may also display a cursor and dialog boxes and screens enabling interaction between a user and the programs and data stored on the computing device. The input mechanisms 996 may enable a user to input data and instructions to the computing device.

The network interface (network I/F) 997 may be connected to a network, such as the Internet, and is connectable to other such computing devices via the network. The network I/F 997 may control data input/output from/to other apparatus via the network.

Other peripheral devices such as microphone, speakers, printer, power supply unit, fan, case, scanner, trackerball etc may be included in the computing device.

Methods embodying the present invention may be carried out on a computing device such as that illustrated in Figure 6. Such a computing device need not have every component illustrated in Figure 6, and may be composed of a subset of those components, which subset includes processor hardware 993 and memory 994. A method embodying the present invention may be carried out by a single computing device as long as the single computing device has a minimum of N processor cores, wherein N is three or more.

A method embodying the present invention may be carried out by a plurality of computing devices operating in cooperation with one another to execute a parallel computing operation on multiple (three or more) processor cores.

## Claims

1. A method for communicating data between a group of processor cores, the method comprising:
during execution of a parallel computing application by the group of processor cores, reading in, by any one processor core of the group, a processing instruction from the parallel computing application invoking an operation with a global data dependency among the group of processor cores, wherein there are N processor cores in the group of processor cores, and N is a positive integer equal to or greater than three;
responding to the reading in of the processing instruction at the one processor core by:
in an initial step performed by each member of the group as a present processor core:
sending, in a point-to-point communication to an immediate successor processor core of the present processor core in a defined cyclic order on the group, data for which the present processor core is responsible;
receiving, in a point-to-point communication from an immediate predecessor processor core of present processor core in the defined cyclic order on the group, data for which the predecessor processor core is responsible;
in a subsequent step performed successively N-1 times by each member of the group as a present processor core:
sending, in a point-to-point communication to the immediate successor processor core, the data in the point-to-point communication received by the present processor core in the preceding step;
receiving, from the immediate predecessor processor core, the data in the point-to-point communication received by the predecessor core in the preceding step.

2. The method according to claim 1, wherein
the group of N processor cores are distributed across a plurality of central processing units.

3. The method according to claim 2, wherein
the plurality of central processing units are distributed across multiple computing nodes, the multiple computing nodes forming a parallel computing system.

4. The method according to any of claims 1 to 3, wherein
the initial step is performed by each member of the group simultaneously; and
each performance of the subsequent step is by each member of the group simultaneously.

5. The method according to any of claims 1 to 4, wherein
the defined cyclic order on the group is predefined for the execution of the parallel computing application.

6. The method according to any of claims 1 to 4, wherein
the defined cyclic order on the group is defined on-the-fly at the invocation of the operation.

7. The method according to claim 2, wherein
within the defined cyclic order, processor cores from the same central processing unit are consecutively adjacent to one another.

8. The method according to claims 3 and 7, wherein
within the defined cyclic order, processor cores from central processing units in the same computing node are consecutively adjacent to one another.

9. The method according to any of claims 1 to 8, wherein
N is less than: log N, multiplied by a latency associated with a collective communication in the group of processor cores, divided by a latency associated with a point-to-point communication in the group of processor cores.

10. The method according to claim 1, wherein, the method further comprises:
upon the execution operation with global data dependency being invoked:
obtaining predefined stored values of a latency associated with a collective communication in the group of processor cores and a latency associated with a point-to-point communication in the group of processor cores, and obtaining a value of N;
calculating, as a first value, the latency associated with a collective communication in the group of processor cores multiplied by N logN;
calculating, as a second value, the latency associated with a point-to-point communication in the group of processor cores multiplied by N² (N squared);
and, if the first value is greater than or equal to the second value, performing the point-to-point communications process; and
if the second value is greater than the first value, performing a collective communications process to carry out the execution operation.

11. A parallel computing system, comprising:
a group of N processor cores configured to execute a parallel computing application, wherein N is a positive integer equal to or greater than three;
the group of N processor cores being configured, during execution of the parallel computing application, to perform a process including:
reading in, by any one processor core of the group, a processing instruction from the parallel computing application invoking an operation with a global data dependency among the group of processor cores, wherein there are N processor cores in the group of processor cores, and N is a positive integer equal to or greater than three;
responding to the reading in of the processing instruction at the one processor core by,
in an initial step performed by each member of the group as a present processor core:
sending, in a point-to-point communication to an immediate successor processor core of the present processor core in a defined cyclic order on the group, data for which the present processor core is responsible;
receiving, in a point-to-point communication from an immediate predecessor processor core of present processor core in the defined cyclic order on the group, data for which the predecessor processor core is responsible;
and in a subsequent step performed successively N-1 times by each member of the group as a present processor core:
sending, in a point-to-point communication to the immediate successor processor core, the data in the point-to-point communication received by the present processor core in the preceding step;
receiving, from the immediate predecessor processor core, the data in the point-to-point communication received by the predecessor core in the preceding step.

12. The parallel computing system according to claim 11, wherein the group of N processor cores are distributed across a plurality of central processing units.

13. The parallel computing system according to claim 12, wherein the plurality of central processing units are distributed across multiple computing nodes, the multiple computing nodes forming the parallel computing system.

14. A computer program which, when executed by a parallel computing system comprising a group of three or more processor cores, causes the parallel computing system to execute a method according to claim 1.

## Amended claims

### Amended claims in accordance with Rule 137(2) EPC.

1. A method for communicating data between a group of processor cores (10), the method comprising:
during execution of a parallel computing application by the group of processor cores, reading in (S502), by any one processor core of the group, a processing instruction from the parallel computing application invoking an operation with a global data dependency among the group of processor cores, wherein there are N processor cores in the group of processor cores, and N is a positive integer equal to or greater than three;
obtaining (S503) predefined stored values of a latency associated with a collective communication in the group of processor cores and a latency associated with a point-to-point communication in the group of processor cores, and obtaining a value of N;
calculating, as a first value, the latency associated with a collective communication in the group of processor cores multiplied by N logN;
calculating, as a second value, the latency associated with a point-to-point communication in the group of processor cores multiplied by N² (N squared);
and, if the second value is greater than the first value, performing (S506) a collective communications process to carry out the execution operation;
and, if the first value is greater than or equal to the second value, responding to the reading in of the processing instruction at the one processor core by performing (S505) a point-to-point communications process comprising:
in an initial step performed by each member of the group as a present processor core:
sending, in a point-to-point communication to an immediate successor processor core of the present processor core in a defined cyclic order on the group, data for which the present processor core is responsible;
receiving, in a point-to-point communication from an immediate predecessor processor core of present processor core in the defined cyclic order on the group, data for which the predecessor processor core is responsible;
in a subsequent step performed successively N-1 times by each member of the group as a present processor core:
sending, in a point-to-point communication to the immediate successor processor core, the data in the point-to-point communication received by the present processor core in the preceding step;
receiving, from the immediate predecessor processor core, the data in the point-to-point communication received by the predecessor core in the preceding step.

2. The method according to claim 1, wherein
the group of N processor cores (10) are distributed across a plurality of central processing units.

3. The method according to claim 2, wherein
the plurality of central processing units are distributed across multiple computing nodes, the multiple computing nodes forming a parallel computing system.

4. The method according to any of claims 1 to 3, wherein
the initial step is performed by each member of the group simultaneously; and
each performance of the subsequent step is by each member of the group simultaneously.

5. The method according to any of claims 1 to 4, wherein
the defined cyclic order on the group is predefined for the execution of the parallel computing application.

6. The method according to any of claims 1 to 4, wherein
the defined cyclic order on the group is defined on-the-fly at the invocation of the operation.

7. The method according to claim 2, wherein
within the defined cyclic order, processor cores from the same central processing unit are consecutively adjacent to one another.

8. The method according to claims 3 and 7, wherein
within the defined cyclic order, processor cores from central processing units in the same computing node are consecutively adjacent to one another.

9. A parallel computing system, comprising:
a group of N processor cores (10) configured to execute a parallel computing application, wherein N is a positive integer equal to or greater than three;
the group of N processor cores being configured, during execution of the parallel computing application, to perform a process including:
reading in (S502), by any one processor core of the group, a processing instruction from the parallel computing application invoking an operation with a global data dependency among the group of processor cores, wherein there are N processor cores in the group of processor cores, and N is a positive integer equal to or greater than three;
obtaining (S503) predefined stored values of a latency associated with a collective communication in the group of processor cores and a latency associated with a point-to-point communication in the group of processor cores, and obtaining a value of N;
calculating, as a first value, the latency associated with a collective communication in the group of processor cores multiplied by N logN;
calculating, as a second value, the latency associated with a point-to-point communication in the group of processor cores multiplied by N² (N squared);
and, if the second value is greater than the first value, performing (S506) a collective communications process to carry out the execution operation;
and, if the first value is greater than or equal to the second value, responding to the reading in of the processing instruction at the one processor core by by performing (S505) a point-to-point communications process comprising:
in an initial step performed by each member of the group as a present processor core:
sending, in a point-to-point communication to an immediate successor processor core of the present processor core in a defined cyclic order on the group, data for which the present processor core is responsible;
receiving, in a point-to-point communication from an immediate predecessor processor core of present processor core in the defined cyclic order on the group, data for which the predecessor processor core is responsible;
and in a subsequent step performed successively N-1 times by each member of the group as a present processor core:
sending, in a point-to-point communication to the immediate successor processor core, the data in the point-to-point communication received by the present processor core in the preceding step;
receiving, from the immediate predecessor processor core, the data in the point-to-point communication received by the predecessor core in the preceding step.

10. The parallel computing system according to claim 9, wherein the group of N processor cores (10) are distributed across a plurality of central processing units.

11. The parallel computing system according to claim 10, wherein the plurality of central processing units are distributed across multiple computing nodes, the multiple computing nodes forming the parallel computing system.

12. A computer program which, when executed by a parallel computing system comprising a group of three or more processor cores, causes the parallel computing system to execute a method according to claim 1.
